# EUROPEAN PATENT SPECIFICATION

(11) **EP 0 351 023 B1**
(45) Date of publication and mention of the grant of the patent: **12.04.1995**
(21) Application number: 89201850.8
(22) Date of filing: 12.07.1989
(51) Int. Cl.: C08G 67/02

(54) **Copolymers of carbon monoxide**
Kohlenmonoxidcopolymere
Copolymères d'oxyde de carbone

(30) Priority: 15.07.1988 NL 8801804
(43) Date of publication of application: 17.01.1990
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 229 408
- EP-A- 0 251 373

## Description

The invention relates to copolymers of carbon monoxide with one or more olefinically unsaturated compounds, to mixtures containing these copolymers and to a process for their preparation.

High molecular weight linear copolymers of carbon monoxide with one or more mono-olefinically unsaturated hydrocarbons (for the sake of brevity referred to as A) in which the double bond is present in terminal position, and in which polymers the monomer units -(CO)- on the one hand, and the units -A′- originating in the applied monomers A on the other hand, occur in alternating order, can be prepared by contacting the monomers at an elevated temperature and pressure with a catalyst composition which includes a Group VIII metal and a phosphorus or nitrogen bidentate ligand.

The above-mentioned polymers contain carbonyl groups as functional groups. At least part of these carbonyl groups can be converted into other functional groups by means of chemical reaction. This chemical modification leads to changes in the polymer properties, which render them eligible for uses for which the original polymers were not or not very suitable.

Recently, an investigation carried out by the Applicant into these polymers has shown that they can be chemically modified by including in the monomer mixture from which the polymers are prepared, besides carbon monoxide and one or more monomers A, one or more mono-olefinically unsaturated compounds (for the sake of brevity referred to as B) in which a non-terminal polymerizable >C=C< group is present which bears one or two oxycarbonyl groups, directly linked to it via a C-C bond. Examples of suitable monomers B are unsaturated monocarboxylic acids, such as crotonic acid and its alkyl esters, such as methyl crotonate, unsaturated dicarboxylic acids, such as maleic acid and fumaric acid and their mono- and dialkyl esters, such as monomethyl maleate and dimethyl fumarate and anhydrides of unsaturated dicarboxylic acids, such as maleic acid anhydride.

When the above-mentioned catalyst compositions are applied to such a monomer mixture, the polymers obtained are polymers made up of units of the general formula -(CO)-A′- and units of the general formula -(CO)-B′-, which units occur randomly distributed within the polymers, with B′ representing a monomer unit originating in an applied monomer B.

Contrary to the chemical modification mentioned hereinbefore, in which at least part of the carbonyl groups present in the polymers are converted into other functional groups, i.e. chemical modification after polymerization, the use of monomers of the B-type as co-monomers can be regarded as in-situ chemical modification, i.e. during polymerization. When in the polymerization type-B monomers are used as co-monomers, the polymers obtained contain oxycarbonyl groups in addition to carbonyl groups. Like the carbonyl groups, these oxycarbonyl groups can be converted at least partially into other functional groups by means of chemical modification. For instance, carboxylic acid ester groups may be converted by saponification into carboxyl groups.

Research has shown that the amount of monomers B incorporated in the polymers is dependent to a great extent on the type of bidentate ligand present in the catalyst composition used. When a catalyst composition containing a phosphorus bidentate ligand is used, the polymers obtained are indeed made up of units of the general formula -(CO)-A′- and units of the general formula -(CO)-B′-, which units occur randomly distributed within the polymers, but these polymers contain on average more than 2000 units -(CO)-A′- per unit -(CO)-B′-. In view of the extremely small amounts of monomers B that are incorporated in the polymers in this way, the polymers thus obtained can hardly be regarded as polymers that are modified with oxycarbonyl groups. When a catalyst composition containing a nitrogen bidentate ligand is used, the polymers obtained are also made up of units of the general formula -(CO)-A′- and units of the general formula -(CO)-B′-, which units occur randomly distributed within the polymers, but these polymers contain on average 50-100 units -(CO)-A′- per unit -(CO)-B′-. The foregoing shows that polymers with a higher content of oxycarbonyl groups can be prepared when using catalyst compositions containing a nitrogen bidentate ligand, than when using catalyst compositions containing a phosphorus bidentate ligand; for some uses, however, it may be desirable to have polymers with even higher contents of oxycarbonyl groups.

During further research done by the Applicant into this subject, attempts were made to meet this wish by replacing the monomers B by monomers chosen from a group of mono-olefinically unsaturated compounds which, like the monomers B, include a non-terminal polymerizable >C=C< group and one or two oxycarbonyl groups, but in which the said oxycarbonyl groups are not directly linked to the >C=C< group. The monomers involved (for the sake of brevity hereinafter referred to as D) are made up of a cyclohexane ring of which
a) the carbon atoms 1 and 4 are linked to one another by a single oxygen or carbon atom,
b) the carbon atoms 5 and 6 are linked to one another by an olefinic double bond, and
c) at least one of the carbon atoms 2 and 3 carries oxycarbonyl group via a C-C bond.

During the polymerization of mixtures of carbon monoxide with one or more monomers A and with one or more monomers D by using catalyst compositions containing a Group VIII metal and a phosphorus or nitrogen bidentate ligand, the following surprising facts have come to light.
1) Attempts at attaining in this way polymers made up of units of the general formula -(CO)-A′- and units of the general formula -(CO)-D′-, which units occur randomly distributed within the polymers and in which D′ is a monomer unit originating in a monomer D used, have remained unsuccessful.
2) When applying catalyst compositions containing a phosphorus bidentate ligand to the afore-mentioned monomer mixtures, in first instance linear polymers made up of units of the general formula -(CO)-D′- are formed. Depending on the applied reaction temperature and reaction time and on the ratios chosen for the monomers in the mixture to be polymerized, it is also possible to prepare block polymers consisting of a linear polymer block made up of units of the general formula -(CO)-D′- and a linear polymer block made up of units of the general formula -(CO)-A′-, and it is further also possible to prepare linear polymers made up of units of the general formula -(CO)-A′-.
3) As was stated earlier in the discussion of the polymerization of mixtures of carbon monoxide with one or more monomers A and with one or more monomers B, a difference was observed in the performances of catalyst compositions containing a phosphorus bidentate ligand and of catalyst compositions containing a nitrogen bidentate ligand. These catalyst compositions also show different performances when they are used for preparing polymers made up of units of the general formula -(CO)-D′-. If a catalyst composition containing a nitrogen bidentate ligand is contacted at an elevated temperature and pressure with a monomer mixture which, in addition to carbon monoxide, contains exclusively one or more monomers D (that is, no monomers A), the polymers obtained are linear polymers made up of units of the general formula -(CO)-D′-. If in this case the nitrogen bidentate ligand is replaced by a phosphorus bidentate ligand, no polymerization takes place.
4) When linear polymers made up of units of the general formula -(CO)-D′- are prepared by starting from a monomer mixture which, in addition to carbon monoxide and one or more monomers D, includes one or more monomers A and by using a catalyst composition containing a phosphorus bidentate ligand, the polymers obtained will in general have considerably higher molecular weights than when they are prepared by starting from a monomer mixture which, in addition to carbon monoxide, contains exclusively one or more monomers D and by using a catalyst composition containing a nitrogen bidentate ligand.

Linear copolymers of carbon monoxide with one or more monomers D (for the sake of brevity referred to as CO/D copolymers), in which copolymers the monomer units -(CO)- on the one hand, and the units -D′- originating in the applied monomers D on the other hand, occur in alternating order, are novel.

The present patent application therefore relates to copolymers of carbon monoxide with one or more olefinically unsaturated compounds, which polymers meet the following criteria:
a) they can be prepared by polymerization of carbon monoxide with one or more compounds (D) containing a cyclohexane ring in which the carbon atoms 1 and 4 are linked to one another by a single oxygen or carbon atom, in which the carbon atoms 5 and 6 are linked to one another by an olefinic double bond, and in which at least one of the carbon atoms 2 and 3 carries an oxycarbonyl group via a C-C bond,
b) they have a linear structure, and
c) in the polymers, the monomer units -(CO)- on the one hand, and the units -D′- derived from the applied monomers D on the other hand, occur in alternating order.

As stated hereinbefore, during the preparation of the CO/D polymers starting from a monomer mixture which, in addition to carbon monoxide and one or more monomers D, contains one or more monomers A, there can also be formed block polymers comprising a linear polymer block made up of units of the general formula -(CO)-D′- and a linear polymer block made up of units of the general formula -(CO)-A′- (for the sake of brevity referred to as CO/D-CO/A block polymers), as well as linear polymers made up of units of the general formula -(CO)-A′- (for the sake of brevity referred to as CO/A polymers).

As the CO/D polymers, so also the CO/D-CO/A block polymers and also the mixtures of CO/D polymers with CO/D-CO/A block polymers and with CO/A polymers are novel.

The present patent application also relates to CO/D-CO/A block polymers as novel polymers and to mixtures of CO/D polymers with CO/D-CO/A block polymers and/or with CO/A polymers as novel polymer mixtures. Finally, the present patent application relates to the preparation of CO/D polymers and to mixtures of CO/D polymers with CO/D-CO/A block polymers and with CO/A polymers.

The monomers D used in the preparation of the polymers and polymer mixtures of the invention contain a cyclohexane ring in which the carbon atoms 1 and 4 are linked to one another by a single oxygen or carbon atom, and in which the carbon atoms 5 and 6 are linked to one another by an olefinic double bond. If in the monomers D the carbon atoms 1 and 4 are linked to one another by an oxygen atom, they may be described as 1,4-endoxo-5-cyclohexene derivatives. If in the monomers D the carbon atoms 1 and 4 are linked to one another by a carbon atom, which carbon atom further bears exclusively two hydrogen atoms, they can be described as 5-norbornene derivatives. If desired, the carbon atom that provides the link between the carbon atoms 1 and 4 of the cyclohexane ring may contain one or two hydrocarbon substituents. If the carbon atom involved bears two methyl groups, the monomers D may be described as 5-bornene derivatives. In the monomers D, at least one of the carbon atoms 2 and 3 of the cyclohexane ring should bear an oxycarbonyl group as substituent. If in the monomers D only one of the carbon atoms 2 and 3 bears an oxycarbonyl group via a C-C bond as substituent, this oxycarbonyl group may be present as carboxylic acid group or as carboxylic acid ester group. If desired, the other carbon atom may in this case bear an alkyl substituent, such as in 3-methyl-5-norbornene-2-carboxylic acid. If in the monomers D both carbon atoms 2 and 3 contain an oxycarbonyl group via a C-C bond as substituent, these oxycarbonyl groups may be present either both as carboxylic acid groups or both as carboxylic acid ester groups, or one as carboxylic acid group and the other as carboxylic acid ester group or as dicarboxylic acid anhydride group. Compounds that can be very suitably used as monomers D in the preparation of the polymers and polymer mixtures of the invention are compounds derived from 5-norbornene, such as
5-norbornene-2,3-dicarboxylic acid anhydride,
5-norbornene-2,3-dicarboxylic acid and
3-methyl-5-norbornene-2-carboxylic acid and compounds derived from
1,4-endoxo-5-cyclohexene, such as
1,4-endoxo-5-cyclohexene-2,3-dicarboxylic acid anhydride.

If the object is to prepare CO/D polymers or to prepare mixtures of CO/D polymers with CO/D-CO/A block polymers and with CO/A polymers by using a catalyst composition containing a phosphorus bidentate ligand, then one or more monomers A should be present in the monomer mixture. Preferably, the monomers A used contain at most 10 carbon atoms per molecule. Very suitable monomers A are mono-olefins, such as ethene, propene, butene-1, hexene-1 and octene-1. Preference is given to ethene as monomer A. In the preparation of the polymers and polymer mixtures of the invention, preference is given to monomer mixtures in which only one monomer D, and when using monomers A, only one monomer A, is present.

In addition to carbonyl groups, the polymers and polymer mixtures of the invention contain oxycarbonyl groups as functional groups. Like the carbonyl groups, these oxycarbonyl groups can be converted at least partly into other functional groups by chemical modification.

As observed hereinbefore, the polymers and polymer mixtures of the invention can be prepared by contacting the monomers at an elevated temperature and pressure with a catalyst composition which includes a Group VIII metal and a phosphorus or nitrogen bidentate ligand.

In the present patent application, Group VIII metals should be taken to be the noble metals ruthenium, rhodium, palladium, osmium, iridium and platinum, and the iron group metals iron, cobalt and nickel.

In the present patent application, phosphorus bidentate ligands should be taken to be compounds of the general formula R¹R²P-R-PR³R⁴, wherein R¹, R², R³ and R⁴ are the same or different, optionally polar-substituted, hydrocarbyl groups, and R represents a bivalent bridging group containing at least two carbon atoms in the bridge. In the present patent application, nitrogen bidentate ligands should be taken to be compounds of the general formula 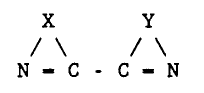
wherein X and Y represent the same or different organic bridging groups each containing three or four atoms in the bridge at least two of which are carbon atoms.

In the catalyst compositions that are used in the preparation of the polymers and polymer mixtures of the invention, the preferred Group VIII metal is chosen from palladium, nickel and cobalt. Special preference is given to palladium as Group VIII metal. By preference, the Group VIII metal is taken up in the catalyst composition in the form of a salt of a carboxylic acid, in particular in the form of an acetate. In addition to a Group VIII metal and a phosphorus or nitrogen bidentate ligand, the catalyst compositions that are used in the preparation of the polymers and polymer mixtures of the invention preferably include an anion of an acid with a pKa of less than 4 (determined in aqueous solution at 18°C) and in particular an anion of an acid with a pKa of less than 2. Examples of acids with a pKa of less than 2 are sulphuric acid, perchloric acid, sulphonic acids, such as methanesulphonic acid, trifluoromethanesulphonic acid and para-toluenesulphonic acid, and halogen carboxylic acids, such as trichloroacetic acid, difluoroacetic acid and trifluoroacetic acid. Preference is given to a sulphonic acid, such as para-toluenesulphonic acid or a halogen carboxylic acid, such as trifluoroacetic acid. The anion of an acid with a pKa of less than 4 may be taken up in the catalyst composition in the form of an acid and/or in the form of a salt, such as a cupric salt. Preferably, the anion is present in the catalyst compositions in a quantity of 1-1000 and in particular of 2-100 equivalents per mol of Group VIII metal. The anions of acids with a pKa of less than 4 may be present in the catalyst compositions of the invention because they have been added as separate components, or because such a palladium compound, for instance, as palladium trifluoroacetate or palladium para-tosylate is used, or because 1,10-phenanthroline-5-sulphonic acid is used as bidentate ligand.

In addition to a Group VIII metal, a phosphorus or nitrogen bidentate ligand and, optionally, an anion of an acid with a pKa of less than 4, the catalyst compositions that can be used in the preparation of the polymers and polymer mixtures of the invention preferably also include an organic oxidant. Examples of suitable organic oxidants are 1,2- and 1,4-quinones, aliphatic nitrites, such as butyl nitrite and aromatic nitro-compounds, such as nitro-benzene and 2,4-dinitro-toluene. Preference is given to 1,4-quinones and in particular to 1,4-benzoquinone and 1,4-naphthoquinone. The quantity of organic oxidant used preferably amounts to 1-10000 and in particular 10-5000 mol per mol of Group VIII metal.

In the catalyst compositions that are used in the preparation of the polymers and polymer mixtures of the invention, the bidentate ligand is preferably present in a quantity of 1-1000 and in particular 2-100 mol per mol of group VIII metal.

If in the preparation of the polymers and polymer mixtures of the invention, use is made of a catalyst composition containing a phosphorus bidentate ligand, preference is given to compounds in which the groups R¹, R², R³ and R⁴ are identical aryl groups and in which the bridging group R has three atoms in the bridge at least two of which are carbon atoms, and in particular to such compounds in which the groups R¹, R², R³ and R⁴ are identical phenyl groups containing one or more polar substituents at least one of which is situated in a position ortho in repect to the phosphorus atom to which the phenyl group involved is bound. Preferably, the polar substituents are alkoxy groups and in particular methoxy groups. Examples of such bidentate ligands are 1,3-bis[di(2-methoxyphenyl)phosphino]propane, 1,3-bis[di(2,4-dimethoxyphenyl)phosphino]propane, and 1,3-bis[di(2,4,6-trimethoxyphenyl)phosphino]propane.

When a phosphorus bidentate ligand is used in the catalyst compositions, 1,3-bis[di(2-methoxyphenyl)phosphino]propane is preferred.

In the nitrogen bidentate ligands that can be suitably used in the catalyst compositions, the bridging groups X and Y are connected to one another by the two carbon atoms depicted in the general formula. In addition to this link, there may also exist a second connection between the bridging groups X and Y, such as in 1,10-phenanthroline and compounds derived therefrom. If, besides carbon atoms, the bridging groups X and Y also contain other atoms in the bridge, these atoms are preferably nitrogen atoms. Preference is further given to nitrogen bidentate ligands in which the bridging groups X and Y are similar to one another. Examples of suitable nitrogen bidentate ligands are 2,2′-bipyridine and compounds derived therefrom, such as 4,4′-dimethyl-2,2′-bipyridine, 1,10-phenanthroline and compounds derived therefrom, such as 1,10-phenanthroline-5-sulphonic acid and 2,2′-biquinoline and 2-(2-pyridyl)benzimidazole. When a nitrogen bidentate ligand is used in the catalyst composition, preference is given to 2,2′-bipyridine and 1,10-phenanthroline.

The preparation of the polymers and polymer mixtures of the invention is preferably carried out by contacting the monomers with a solution of the catalyst composition in a diluent. Suitable diluents that may be mentioned are lower alcohols such as methanol. Polymerization may be carried out either batchwise or continuously.

The amounts of catalyst composition used in the preparation of the polymers and polymer mixtures may vary within wide ranges. Per mol of olefinically unsaturated compound to be polymerized, such a quantity of catalyst composition is preferably used as to contain from 10⁻⁷ to 10⁻³ and in particular from 10⁻⁶ to 10⁻⁴ mol of Group VIII metal.

The preparation of the polymers and polymer mixtures is preferably carried out at a temperature of 20-150°C and a pressure of 2-150 bar and in particular at a temperature of 30-130°C and a pressure of 35-100 bar. The molar ratio of the olefinically unsaturated compounds relative to carbon monoxide is preferably 10:1-1:10 and in particular 5:1-1:5.

The invention is now illustrated with the aid of the following examples.

### Example 1

A stirred autoclave of 250 ml content was charged with a catalyst solution comprising
50 ml of methanol,
0.1 mmol of palladium acetate,
2 mmol trifluoroacetic acid, and
0.15 mmol of 1,3-bis(diphenylphosphino)propane.

After 5 g of 5-norbornene-2,3-dicarboxylic acid anhydride was introduced into the autoclave, air was removed by evacuation. Then, ethene was pressed in until a pressure of 20 bar was reached, followed by carbon monoxide, until a pressure of 50 bar was reached. Finally, the contents of the autoclave were heated to 65°C. Polymerization was terminated after 5 hours by cooling to room temperature and releasing the pressure. The polymeric material formed was filtered off, washed with methanol and dried in vacuo at room temperature. 19.5 g of polymeric material was obtained.

A sample of the polymeric material was dissolved at a concentration of 30 %w in a mixture of 90 %vol of hexafluoroisopropanol and 10 %vol of deutero-benzene for analysis. The solution separated into two layers. These two layers were each separately subjected to ¹³C-NMR analysis. The top layer held a physical mixture of two polymers, notably a linear alternating CO/5-norbornene-2,3-dicarboxylic acid anhydride copolymer and a linear alternating CO/ethene copolymer. In the mixture, 132 units derived from ethene were encountered per 5 units derived from 5-norbornene-2,3-dicarboxylic acid anhydride. The bottom layer held a block copolymer made up of a linear alternating CO/5-norbornene-2,3-dicarboxylic acid anhydride copolymer block and a linear alternating CO/ethene copolymer block. In the block copolymer, 86 units derived from ethene were encountered per 14 units derived from 5-norbornene-2,3-dicarboxylic acid anhydride. The total polymeric material obtained in this experiment - being a mixture of three different polymers - contained 218 units derived from ethene per 19 units derived from 5-norbornene-2,3-dicarboxylic acid anhydride.

### Example 2

Example 1 was substantially repeated, except for the following differences
a) the catalyst solution included 0.3 mmol of copper paratosylate instead of trifluoroacetic acid, and
b) the reaction temperature was 70°C instead of 65°C.

26 g of polymeric material was obtained. With the aid of ¹³C-NMR analysis it was established that, like the polymeric material obtained in Example 1, it was made up of a mixture of the same three polymers as mentioned therein.

### Example 3

Example 1 was substantially repeated, except for the following differences
a) 10 g instead of 5 g of 5-norbornene-2,3-dicarboxylic acid anhydride was used, and
b) the reaction temperature was 75°C instead of 65°C.

21 g of polymeric material was obtained. With the aid of ¹³C-NMR analysis it was established that, like the polymeric materials obtained in Examples 1 and 2, it was made up of a mixture of the three polymers mentioned in Example 1. The total polymeric material obtained in this experiment contained the units derived from 5-norbornene-2,3-dicarboxylic acid anhydride and the units derived from ethene in a 1:1 ratio.

### Example 4

Example 1 was substantially repeated, except for the following differences
a) 5 g of 5-norbornene-2,3-dicarboxylic acid instead of 5-norbornene-2,3-dicarboxylic acid anhydride was used,
b) ethene was pressed in until a pressure of 15 bar instead of 20 bar was reached, followed by carbon monoxide, until a pressure of 45 bar instead of 50 bar was reached,
c) the reaction temperature was 80°C instead of 65°C, and
d) the reaction time was 2 hours instead of 5 hours.

17 g of polymeric material was obtained. With the aid of ¹³C-NMR analysis it was established that, like the polymeric materials obtained in Examples 1-3, it was made up of a mixture of three polymers, viz. a linear alternating CO/5-norbornene-2,3-dicarboxylic acid copolymer, a linear alternating CO/ethene copolymer and a block copolymer made up of a linear alternating CO/5-norbornene-2,3-dicarboxylic acid copolymer block and a linear alternating CO/ethene copolymer block.

### Example 5

Example 1 was substantially repeated, except for the following differences
a) 5 g of 1,4-endoxo-5-cyclohexene-2,3-dicarboxylic acid anhydride instead of 5-norbornene-2,3-dicarboxylic acid anhydride was used, and
b) the reaction temperature was 75°C instead of 65°C.

5.7 g of polymeric material was obtained. With the aid of ¹³C-NMR analysis it was established that, like the polymeric materials prepared by Examples 1-4, it was made up of a mixture of three polymers, viz. a linear alternating CO/1,4-endoxo-5-cyclohexene-2,3-dicarboxylic acid anhydride copolymer, a linear alternating CO/ethene copolymer and a block copolymer made up of a linear alternating CO/1,4-endoxo-5-cyclohexene-2,3-dicarboxylic acid anhydride copolymer block and a linear alternating CO/ethene copolymer block. In the mixture, 139 units derived from ethene were encountered per 3 units derived from 1,4-endoxo-5-cyclo-hexene-2,3-dicarboxylic acid anhydride.

### Example 6

Example 1 was substantially repeated, except for the following differences
a) 10 g instead of 5 g of 5-norbornene-2,3-dicarboxylic acid anhydride was used,
b) 15 bar instead of 20 bar ethene and 35 bar instead of 30 bar carbon monoxide were pressed into the autoclave,
c) the reaction temperature was 60°C instead of 65°C, and
d) the reaction time was 3 hours instead of 5 hours.

12 g of polymeric material was obtained. With the aid of ¹³C-NMR analysis it was established that the polymeric material consisted entirely of a linear alternating CO/5-norbornene2,3-dicarboxylic acid anhydride copolymer.

### Example 7

A stirred autoclave of 250 ml content was charged with a catalyst solution comprising
50 ml of methanol,
0.1 mmol of palladium acetate,
1 mmol para-toluenesulphonic acid,
3 mmol 2,2′-bipyridine, and
20 mmol 1,4-benzoquinone.

After 10 g of 5-norbornene-2,3-dicarboxylic acid anhydride was introduced into the autoclave, the air was removed by evacuation. Then, carbon monoxide was pressed in until a pressure of 40 bar was reached. Finally, the contents of the autoclave were heated to 60°C. Polymerization was terminated after 5 hours by cooling to room temperature and releasing the pressure. With the aid of ¹³C-NMR analysis of the reaction product it was established that it contained about 12 g of linear alternating CO/5-norbornene2,3-dicarboxylic acid anhydride copolymer.

### Example 8

Example 7 was substantially repeated, except for the following differences
a) 10 g of 3-methyl-5-norbornene-2-carboxylic acid instead of 5-norbornene-2,3-dicarboxylic acid anhydride was used,
b) carbon monoxide was pressed in until a pressure of 30 bar instead of 40 bar was reached,
c) the reaction temperature was 65°C instead of 60°C, and
d) the reaction time was 1 hour instead of 5 hours.

With the aid of ¹³C-NMR analysis of the reaction product it was established that it contained about 7 g of linear alternating CO/3-methyl-5-norbornene-2-carboxylic acid.

### Example 9

Example 7 was substantially repeated, except for the following differences
a) 10 g of 5-norbornene-2,3-dicarboxylic acid instead of 5-norbornene-2,3-dicarboxylic acid anhydride was used, and
b) the reaction time was 1 hour instead of 5 hours.

With the aid of ¹³C-NMR analysis of the reaction product it was established that it contained about 6 g of linear alternating CO/5-norbornene-2,3-dicarboxylic acid copolymer.

### Example 10

Example 1 was substantially repeated, except for the following differences
a) the catalyst solution used comprised
   30 ml of methanol,
   40 ml of tetrahydrofuran,
   0.1 mmol of palladium acetate,
   2 mmol copper para-tosylate, and
   0.15 mmol of 1,3-bis(diphenylphosphino)propane,
b) 10 g of maleic acid anhydride was used instead of 5-norbornene-2,3-dicarboxylic acid anhydride,
c) ethene was pressed in until a pressure of 15 bar instead of 20 was reached, followed by carbon monoxide, until a pressure of 45 bar instead of 50 bar was reached, and
c) the reaction temperature was 90°C instead of 65°C. 8.5 g of polymeric material was obtained.

### Example 11

Example 10 was substantially repeated, the difference being that the catalyst solution comprised 1 mmol of para-toluene-sulphonic acid, 3 mmol of 2,2′-bipyridine, and 20 mmol of 1,4-benzoquinone, instead of copper para-tosylate and 1,3-bis(diphenylphosphino)propane.

5.7 g of polymeric material was obtained.

Of Examples 1-11, Examples 1-9 are examples in accordance with the invention. In these examples, polymers and polymer mixtures of the invention are prepared starting from mixtures of carbon monoxide with a monomer D and optionally a monomer A and by using a catalyst composition containing a Group VIII metal and a phosphorus or nitrogen bidentate ligand. Examples 10 and 11 fall outside the scope of the invention and have been included application for comparison. With the aid of ¹³C-NMR analysis of the polymeric materials obtained in Examples 10 and 11 it was established that they were made up of linear CO/ethene/maleic acid anhydride terpolymers, in which units originating in carbon monoxide on the one hand, and units originating in ethene and maleic acid anhydride on the other hand, occured in alternating order. From the data obtained by ¹³C-NMR analysis, it was further concluded that the terpolymers prepared according to Examples 10 and 11, contained on average more than 2000 and on average 83 units -(CO)-A′- per unit -(CO)-B′-, respectively.

In the ready polymers of the invention which have been prepared in a methanol-containing diluent and starting from a monomer mixture which includes a monomer containing an oxycarbonyl group as carboxylic acid group or as carboxylic acid anhydride group, at least part of the carboxylic acid groups and the carboxylic acid anhydride groups are present as methyl ester groups.

## Claims

1. Copolymers of carbon monoxide with one or more olefinically unsaturated compounds, characterized in that
a) they can be prepared by polymerization of carbon monoxide with one or more compounds (D) containing a cyclohexane ring in which the carbon atoms 1 and 4 are linked to one another by a single oxygen or carbon atom, in which the carbon atoms 5 and 6 are linked to one another by an olefinic double bond and in which at least one of the carbon atoms 2 and 3 carries an oxycarbonyl group via a C-C bond,
b) they have a linear structure, and
c) in the polymers, the monomer units -(CO)- on the one hand, and the units -D′- derived from the applied monomers D on the other hand, occur in alternating order.

2. Copolymer mixtures, characterized in that they comprise a mixture of
a) copolymers as claimed in claim 1, with
b) linear copolymers of carbon monoxide with one or more monoolefinic hydrocarbons (A) where the double bond is present in terminal position, in which polymers the monomer units -(CO)- on the one hand, and the units -A′- derived from the monomers A used on the other hand, occur in alternating order, and/or
c) block copolymers of carbon monoxide with one or more monomers D and with one or more monomers A, which consist of a linear polymer block made up of units -(CO)-D′- and a linear polymer block made up of units -(CO)-A′-.

3. Copolymers and copolymer mixtures as claimed in claim 1 or 2, characterized in that the monomers D used are compounds derived from 5-norbornene, such as
5-norbornene-2,3-dicarboxylic acid anhyride,
5-norbornene-2,3-dicarboxylic acid and
3-methyl-5-norbornene-2-carboxylic acid.

4. Copolymers and copolymer mixtures as claimed in claim 1 or 2, characterized in that the monomers D used are compounds derived from 1,4-endoxo-5-cyclohexene, such as 1,4-endoxo-5-cyclohexene-2,3-dicarboxylic acid anhyride.

5. Copolymers and copolymer mixtures as claimed in one or more of claims 1-4, characterized in that the monomers A that are used in the preparation of the copolymer mixtures and optionally in the preparation of the copolymers, are mono-olefins such as ethene.

6. Block copolymers of carbon monoxide with one or more monomers D and with one or more monomers A, which consist of a linear polymer block made up of units -(CO)-D'- and a linear polymer block made up up of units -(CO)-A'-.

7. Process for the preparation of copolymers as claimed in claim 1, characterized in that a mixture of carbon monoxide with one or more monomers D is contacted at an elevated temperature and pressure with a catalyst composition which includes a Group VIII metal and a nitrogen bidentate ligand of the general formula 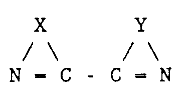 wherein X and Y represent the same or different organic bridging groups each containing three or four atoms in the bridge at least two of which are carbon atoms.

8. Process as claimed in claim 7, characterized in that 2,2'-bipyridine or 1,10-phenanthroline is employed as bidentate ligand.

9. Process for the preparation of copolymers and copolymer mixtures as claimed in claims 1 and 2, characterized in that a mixture of carbon monoxide with one or more monomers A and one or more monomers D is contacted at an elevated temperature and pressure with a catalyst composition which includes a Group VIII metal and a phosphorus bidentate ligand of the general formula R¹R²P-R-PR³R⁴, wherein R¹, R², R³, and R⁴ are the same or different, optionally polar-substituted, hydrocarbyl groups, and R represents a bivalent bridging group containing at least two carbon atoms in the bridge.

10. Process as claimed in one or more of claims 7-9, characterized in that the bidentate ligand is present in the catalyst composition in a quantity of 1-1000 mol per mol of group VIII metal.

11. Process as claimed in one or more of claims 7-10, characterized in that the catalyst composition includes palladium as group VIII metal.

12. Process as claimed in one or more of claims 7-11, characterized in that, in addition, the catalyst composition includes an anion of an acid with a pKa of less than 4.

13. Process as claimed in claim 12, characterized in that the anion of an acid with a pKa of less than 4 is present in the catalyst composition in a quantity of 1-1000 equivalents per mol of group VIII metal.

14. Process as claimed in one or more of claims 7-13, characterized in that polymerization is carried out at a temperature of 20-150°C, a pressure of 2-150 bar and a molar ratio of the olefinically unsaturated compounds relative to carbon monoxide, of 10:1-1:10, and in that per mol of olefinically unsaturated compound to be polymerized, such a quantity of catalyst composition is used as to contain 10⁻⁷ -10⁻³ mol of Group VIII metal.

## Patentansprüche

1. Copolymere aus Kohlenmonoxid und einer oder mehreren olefinisch ungesättigten Verbindung(en), **dadurch gekennzeichnet**, daß sie
a) durch Polymerisation von Kohlenmonoxid mit einer oder mehreren Verbindung(en) D, enthaltend einen Cyclohexanring, in welchem die Kohlenstoffatome 1 und 4 untereinander durch ein einzelnes Sauerstoffatom oder Kohlenstoffatom verbunden sind, in welchem die Kohlenstoffatome 5 und 6 miteinander durch eine olefinische Doppelbindung verbunden sind und in welchem mindestens eines der Kohlenstoffatome 2 oder 3 mittels einer C-C-Bindung mit einer Oxycarbonylgruppe verknüpft ist, herstellbar sind,
b) eine lineare Struktur aufweisen und
c) daß die Monomereinheiten -(CO)- einerseits und die vom eingesetzten Monomeren D abgeleiteten Einheiten -D'- andererseits in den Polymeren in alternierender Reihenfolge vorliegen.

2. Copolymermischungen, dadurch gekennzeichnet, daß sie eine Mischung der nachstehenden Art umfassen:
a) Copolymere wie in Anspruch 1 beansprucht, zusammen mit
b) einem Copolymer von Kohlenmonoxid mit einem oder mehreren olefinischen Kohlenwasserstoff(en) (A) mit endständiger Doppelbindung, in welchen Polymeren die Monomereneinheiten -(CO)- einerseits und die von dem Monomeren A abgeleiteten Einheiten -A'- andererseits in alternierender Reihenfolge vorliegen und/oder zusammen mit
c) Blockpolymeren aus Kohlenmonoxid und einem oder mehreren Monomeren D und einem oder mehreren Monomeren A, die aus einem linearen, aus Einheiten -(CO)-D'- bestehenden Polymerblock und aus einem linearen, aus Einheiten -(CO)-A'- bestehenden Polymerblock aufgebaut sind.

3. Copolymere und Copolymermischungen wie in Anspruch 1 oder 2 beansprucht, dadurch gekennzeichnet, daß als Monomere D von 5-Norbornen abgeleitete Verbindungen verwendet werden, wie z.B.
5-Norbornen-2,3-dicarbonsäureanhydrid,
5-Norbornen-2,3-dicarbonsäure und
3-Methyl-5-norbornen-2-carbonsäure.

4. Copolymere und Copolymermischungen wie in Anspruch 1 oder 2 beansprucht, dadurch gekennzeichnet, daß als Monomere D Verbindungen verwendet werden, die sich von 1,4-Endoxo-5-cyclohexen ableiten, wie z.B. 1,4-Endoxo-5-cyclohexen-2,3-dicarbonsäureanhydrid.

5. Copolymere und Copolymermischungen wie in irgendeinem der Ansprüche 1 bis 4 beansprucht, dadurch gekennzeichnet, daß die für die Herstellung der Copolymermischungen und gegebenenfalls für die Herstellung der Copolymere verwendeten Monomere A Monoolefine, wie Ethen, sind.

6. Blockcopolymere aus Kohlenmonoxid und einem oder mehreren Monomeren D und einem oder mehreren Monomeren A, welche aus einem aus Einheiten -(CO)-D'- bestehenden linearen Polymerblock und aus einem aus Einheiten -(CO)-A'- bestehenden linearen Polymerblock aufgebaut sind.

7. Verfahren zur Herstellung von Copolymeren wie in Anspruch 1 beansprucht, dadurch gekennzeichnet, daß eine Mischung aus Kohlenmonoxid und einem oder mehreren Monomeren D bei erhöhter Temperatur und erhöhtem Druck mit einer Katalysatorzusammensetzung kontaktiert wird, welche ein Metall der Gruppe VIII und einen stickstoffhaltigen zweizähnigen Liganden der allgemeinen Formel 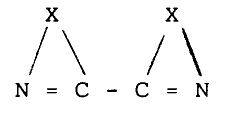 umfaßt, in welcher X und Y gleiche oder unterschiedliche Brückengruppen darstellen, welche drei oder vier Atome in der Brücke enthalten, von denen mindestens zwei Atome Kohlenstoffatome sind.

8. Verfahren wie in Anspruch 7 beansprucht, dadurch gekennzeichnet, daß die Verbindung 2,2'-Bipyridin oder 1,10-Phenanthrolin als zweizähniger Ligand verwendet wird.

9. Verfahren zur Herstellung von Copolymeren oder Copolymermischungen wie in Anspruch 1 oder 2 beansprucht, dadurch gekennzeichnet, daß eine Mischung aus Kohlenmonoxid und einem oder mehreren Monomeren A und einem oder mehreren Monomeren D bei erhöhter Tempeatur und erhöhtem Druck mit einer Katalysatorzusammensetzung kontaktiert wird, welche ein Metall der Gruppe VIII und einen phosphorhaltigen zweizähnigen Liganden der allgemeinen Formel R¹R²P-R-PR³R⁴ enthält, in welcher R¹, R², R³ und R⁴ die gleichen oder unterschiedliche, gegebenenfalls polar substituierte Kohlenwasserstoffgruppen bedeuten, und R eine zweiwertige Brückengruppe mit mindestens zwei Kohlenstoffatomen in der Brücke darstellt.

10. Verfahren wie in einem oder mehreren der Ansprüche 7 bis 9 beansprucht, dadurch gekennzeichnet, daß der zweizähnige Ligand in der Katalysatorzusammensetzung in einer Menge von 1 bis 1000 Mol je Mol Metall der Gruppe VIII vorliegt.

11. Verfahren wie in einem oder mehreren der Ansprüche 7 bis 10 beansprucht, dadurch gekennzeichnet, daß die Katalysatorzusammensetzung als Metall der Gruppe VIII Palladium enthält.

12. Verfahren wie in irgendeinem der Ansprüche 7 bis 11 beansprucht, dadurch gekennzeichnet, daß die Katalysatorzusammensetzung zusätzlich ein Anion einer Säure mit einem pKa-Wert von weniger als 4 enthält.

13. Verfahren nach Anspruch 12, dadurch gekennzeichnet, daß das Anion der Säure mit einem pKa-Wert vn weniger als 4 in der Katalysatorzusammensetzung in einer Menge von 1 bis 1000 Äquivalenten je Mol des Metalls der Gruppe VIII vorliegt.

14. Verfahren wie in irgendeinem der Ansprüche 7 bis 13 beansprucht, dadurch gekennzeichnet, daß die Polymerisation bei einer Temperatur von 20 bis 150°C, einem Druck von 2 bis 150 bar und einem Molverhältnis der olefinisch ungesättigten Verbindungen zu Kohlenmonoxid im Bereich von 10:1 bis 1:10 durchgeführt wird, und daß je Mol zu polymerisierender olefinisch ungesättigter Verbindung eine solche Menge der Katalysatorzusammensetzung eingesetzt wird, welche 10⁻⁷ bis 10⁻³ Mol Metall der Gruppe VIII enthält.

## Revendications

1. Copolymères d'oxyde de carbone avec un ou plusieurs composés oléfiniquement insaturés, caractérisés en ce que :
a) ils peuvent être préparés par polymérisation d'oxyde de carbone avec un ou plusieurs composés (D) contenant un noyau de cyclohexane dans lequel les atomes de carbone 1 et 4 sont liés l'un à l'autre par un seul atome d'oxygène ou de carbone, dans lequel les atomes de carbone 5 et 6 sont liés l'un à l'autre par une double liaison oléfinique et dans lequel au moins un des atomes de carbone 2 et 3 porte un groupe oxycarbonyle au moyen d'une liaison C-C,
b) ils ont une structure linéaire et
c) dans les polymères, les mailles de monomère -(CO)- d'une part et les mailles -D'- dérivées des monomères D utilisés d'autre part sont présentes dans un ordre alterné.

2. Mélanges de copolymères, caractérisés en ce qu'ils comprennent un mélange de
a) copolymères selon la revendication 1, avec
b) des copolymères linéaires d'oxyde de carbone avec un ou plusieurs hydrocarbures mono-oléfiniques (A) dans lesquels la double liaison est présente en position terminale, polymères dans lesquels les mailles de monomère -(CO)- d'une part et les mailles -A'-dérivées des monomères A utilisés d'autre part sont présentes dans un ordre alterné, et/ou
c) des copolymères séquencés d'oxyde de carbone avec un ou plusieurs monomères D et avec un ou plusieurs monomères A, qui consistent en un bloc de polymère linéaire constitué de mailles -(CO)-D'- et un bloc de polymère linéaire constitué de mailles -(CO)-A'-.

3. Copolymères et mélanges de copolymères selon la revendication 1 ou 2, caractérisés en ce que les monomères D utilisés sont des composés dérivés du 5-norbornène, tels que les suivants :
anhydride d'acide 5-norbornène-2,3-dicarboxylique,
acide 5-norbornène-2,3-dicarboxylique et
acide 3-méthyl-5-norbornène-2-carboxylique.

4. Copolymères et mélanges de copolymères selon la revendication 1 ou 2, caractérisés en ce que les monomères D utilisés sont des composés dérivés du 1,4-endoxo-5-cyclohexène, comme l'anhydride d'acide 1,4-endoxo-5-cyclohexène-2,3- dicarboxylique.

5. Copolymères et mélanges de copolymères selon une ou plusieurs des revendications 1-4, caractérisés en ce que les monomères A qui sont utilisés dans la préparation des mélanges de copolymères et éventuellement dans la préparation des copolymères sont des mono-oléfines telles que l'éthène.

6. Copolymères séquencés d'oxyde de carbone avec un ou plusieurs monomères D et avec un ou plusieurs monomères A, qui consistent en un bloc de polymère linéaire constitué de mailles -(CO)-D'- et un bloc de polymère linéaire constitué de mailles -CO)-A'-.

7. Procédé pour la préparation de copolymères tels que revendiqués dans la revendication 1, caractérisé en ce qu'un mélange d'oxyde de carbone avec un ou plusieurs monomères D est mis en contact à une température et une pression élevées avec une composition catalytique qui comprend un métal du groupe VIII et un ligand bidenté de l'azote de la formule générale 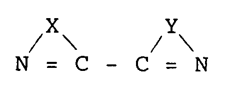 dans laquelle X et Y représentent des groupes organiques formant pont identiques ou différents contenant chacun trois ou quatre atomes dans le pont dont au moins deux sont des atomes de carbone.

8. Procédé selon la revendication 7, caractérisé en ce qu'on utilise la 2,2'-bipyridine ou la 1,10-phénanthroline comme ligand bidenté.

9. Procédé pour la préparation de polymères et de mélanges de copolymères tels que revendiqués dans les revendications 1 et 2, caractérisé en ce qu'un mélange d'oxyde de carbone avec un ou plusieurs monomères A et un ou plusieurs monomères D est mis en contact à une température et une pression élevées avec une composition catalytique qui comprend un métal du groupe VIII et un ligand bidenté du phosphore de la formule générale R¹R²P-R-PR³R⁴, dans laquelle R¹, R², R³ et R⁴ sont des groupes hydrocarbuyle identiques ou différents, éventuellement substitués par des groupes polaires, et R représente un groupe bivalent formant pont contenant au moins deux atomes de carbone dans le pont.

10. Procédé selon une ou plusieurs des revendications 7-9, caractérisé en ce que le ligand bidenté est présent dans la composition catalytique à raison de 1-1000 moles par mole de métal du groupe VIII.

11. Procédé selon une ou plusieurs des revendications 7-10, caractérisé en ce que la composition catalytique comprend du palladium comme métal du groupe VIII.

12. Procédé selon une ou plusieurs des revendications 7-11, caractérisé en ce que, de plus, la composition catalytique comprend un anion d'un acide d'un pKa de moins de 4.

13. Procédé selon la revendication 12, caractérisé en ce que l'anion d'un acide d'un pKa de moins de 4 est présent dans la composition catalytique à raison de 1-1000 équivalents par mole de métal du groupe VIII.

14. Procédé selon une ou plusieurs des revendications 7-13, caractérisé en ce que la polymérisation est effectuée à une température de 20-150°C, une pression de 2-150 bars et avec un rapport molaire des composés oléfiniquement insaturés à l'oxyde de carbone compris entre 10:1 et 1:10, et en ce que, par mole de composé oléfiniquement insaturé à polymériser, on utilise une quantité de composition catalytique telle qu'elle contienne de 10⁻⁷ à 10⁻³ mole de métal du groupe VIII.
